# EUROPEAN PATENT APPLICATION

(11) **EP 4 819 244 A1**
(43) Date of publication of application: **07.10.2026**
(21) Application number: 24896505.5
(22) Date of filing: 26.11.2024
(51) Int. Cl.: H01M 4/58, H01M 4/505, H01M 4/525, H01M 10/0525, C01B 25/45, C01B 32/05, C01B 32/15, C01G 23/00, C01G 33/00, C01B 35/10, B82Y 30/00

(54) **MODIFIED POSITIVE ELECTRODE MATERIAL, PREPARATION METHOD THEREFOR AND USE THEREOF**

(30) Priority: 30.11.2023 CN 202311636644
(71) Applicant: Shenzhen Dynanonic Co., Ltd., Shenzhen, Guangdong 518000 (CN)
(72) Inventor: JIANG, Mingxiu, Shenzhen, Guangdong 518000 (CN); XU, Rongyi, Shenzhen, Guangdong 518000 (CN); KONG, Lingyong, Shenzhen, Guangdong 518000 (CN); LI, Yineng, Shenzhen, Guangdong 518000 (CN)
(74) Representative: Petraz, Gilberto Luigi
(86) International application number: PCT/CN2024/134415
(87) International publication number: WO 2025/113416

(57) **Abstract**

This application relates to a technical field of lithium-ion batteries, and more specifically, to a modified cathode material, a preparation method therefor, and an application thereof. Elements within particles of the modified cathode material are uniformly distributed, and the modified cathode material has a chemical formula of LiₐFe_{b}Mn_{c}M_{d}PO₄, M is a dopant element. The preparation method, includes: dissolving a raw material for preparing particles of the modified cathode material, in an organic solvent to form a gel; subjecting the gel to a heating and combustion treatment to obtain a fluffy, porous precursor powder; subjecting the precursor powder to a sintering treatment to obtain the modified cathode material. By first preparing a gel and then subjecting the gel to a heat-combustion treatment, the resulting modified cathode material exhibits a uniform and stable elemental distribution, high crystallinity, and more desirable electrochemical performance, in particular, more excellent Coulombic efficiency, rate performance, and cycling performance, and can be used in cathodes and secondary batteries.

## Description

This application claims priority to the Chinese Patent Application filed with the China National Intellectual Property Administration on November 30, 2023, having Application No. 2023116366445 and titled "Modified Cathode Material, Preparation Method therefor, and Application Thereof."

### TECHNICAL FIELD

This application relates to the field of lithium-ion battery technology, and more particularly to a modified cathode material, a preparation method therefor, and an application thereof.

### BACKGROUND

Cathode materials constitute a critical factor constraining the development of high-performance lithium-ion batteries. However, in conventional processing methods, after the raw materials are mixed, the constituent elements tend to undergo varying degrees of agglomeration during the sintering process. This results in cathode materials with low crystallinity, thereby compromising the performance of the resulting cathode material.

Furthermore, to enhance the performance of lithium-ion batteries, in addition to preparing cathode materials via conventional processes, researchers have also employed modification strategies such as elemental doping, surface coating, and morphology control. For instance, as a material featuring an olivine structure that strikes a balance between high energy density and high safety, lithium manganese iron phosphate (LMFP) is widely utilized in electric vehicles. However, LMFP suffers from inherently low electrical conductivity; consequently, its commercial viability necessitates the enhancement of its electrochemical performance through techniques such as doping and surface coating.

Specifically, the crystallinity of the synthesized LMFP material influences various properties of the material, such as the rate performance and cycling performance of the resulting batteries. However, in previous studies, the doping process, which involves mixing raw materials, often resulted in varying degrees of agglomeration among the dopant elements during the subsequent sintering stage. Consequently, it has been difficult to obtain LMFP materials characterized by a uniform distribution of both the host elements and the dopant elements, coupled with high crystallinity. Furthermore, under existing coating techniques, the uniformity of the coating layer thickness remains relatively low, which in turn hinders the widespread application of LMFP.

### SUMMARY

### TECHNICAL PROBLEMS

The objective of the present application is to provide a modified cathode material, as well as a method for its preparation and its applications, aiming to address the technical problems associated with existing lithium manganese iron phosphate cathode materials, specifically, the non-uniform distribution of elements within the particles and low crystallinity, which result in poor performance of the cathode material and, consequently, poor performance of the resulting batteries.

### TECHNICAL SOLUTIONS

To achieve the aforementioned objectives, the following technical solutions are adopted in the present application:
In a first aspect, the present application provides a modified cathode material. Elements within particles of the modified cathode material are uniformly distributed. The modified cathode material has a chemical formula of LiₐFe_{b}Mn_{c}M_{d}PO₄, in which, 0.9 ≤ a ≤ 1.1, 0.2 ≤ b ≤ 0.9, 0.1 ≤ c ≤ 0.8, 0 < d ≤ 1, and 1.9 ≤ a + b + c + d ≤ 2.1, and M is a dopant element.

In the embodiments of the present application, the elements within the particles of the modified cathode material exhibit a uniform distribution and high crystallinity; furthermore, the modified cathode material incorporates dopant elements, thereby endowing the cathode material with excellent electrochemical properties, specifically, high Coulombic efficiency, rate performance, and cycling performance, when utilized in batteries.

In some embodiments, at least 90% of the particles in the modified cathode material satisfy Δy ≤ 0.02,
in which, Δy = | y - y' + (x - x') |;
y is a molar ratio of a Mn element to a Fe element at any position within at least 90% of the particles in the modified cathode material;
y' is an average molar ratio of the Mn element to the Fe element contained in the modified cathode material;
x is a doping amount of the dopant element at any position within at least 90% of the particles in the modified cathode material;
x' is an average doping amount of the dopant element contained in the modified cathode material; and
Δy is a molar deviation content of the Mn element, the Fe element, and the dopant element M at any position within the particles of the modified cathode material.

In some embodiments, the modified cathode material further comprises a shell layer. The shell layer is coated on a surface of each of the particles of the modified cathode material, and the shell layer comprises a carbon material and/or a non-carbon material.

In some embodiments, the carbon material comprises an amorphous carbon.

In some embodiments, the non-carbon material comprises at least one of a fast ion conductor and an oxide.

In some embodiments, the oxide comprises at least one element selected from Al, Zr, B, Ti, Si, Li, P, and S.

In some embodiments, the oxide comprises at least one selected from titanium dioxide, zirconium dioxide, silicon dioxide, and boron oxide.

In some embodiments, the fast ion conductor comprises at least one selected from a phosphate, a lithium metal composite oxide, and a lithium metal composite compound.

In some embodiments, a thickness of the shell layer is 0.3 to 10 nm.

In some embodiments, for at least 90% of the particles in the modified cathode material, a difference between a minimum thickness and a maximum thickness of the shell layer is no greater than 0.1 nm.

In some embodiments, a crystallinity of a (020) crystal plane of the modified cathode material is 3.8% to 3.95%.

In some embodiments, a D50 particle size of the particles of the cathode material is 100 nm to 200 nm.

In some embodiments, the dopant element comprises at least one element selected from Zr, Co, In, Ti, Na, Zn, Al, Ni, Ca, Nb, Cd, Sn, Mo, and B.

In a second aspect, the present application provides a preparation method for a modified cathode material. The preparation method comprises the following steps:
dissolving a raw material for preparing particles of the modified cathode material, in an organic solvent to form a gel;
subjecting the gel to a heating and combustion treatment to obtain a fluffy, porous precursor powder; and
subjecting the precursor powder to a sintering treatment to obtain the modified cathode material.

The preparation method of the present application involves first preparing a gel, within which the raw materials are uniformly dispersed and their spatial distribution remains stable. Subsequently, the gel is subjected to a heat-combustion treatment, which facilitates the simultaneous reaction of the various chemical components at essentially the same temperature point. Moreover, because the raw materials are uniformly dispersed and stably positioned within the gel, these characteristics are transferred from the liquid phase to the resulting solid phase during the heating and combustion process, yielding a precursor powder. This powder then undergoes a sintering treatment to produce the modified cathode material. Consequently, the resulting modified cathode material exhibits a uniform and stable elemental distribution as well as high crystallinity. Compared to cathode materials produced by prior art methods, it demonstrates superior electrochemical performance, in particular, more excellent Coulombic efficiency, rate performance, and cycling performance. The preparation process is highly controllable, and the obtained modified cathode material has stable structural and physicochemical properties.

In some embodiments, the raw material comprises: a Li source, a P source, a Mn source, a Fe source, and an M source. M in the M source is a dopant element, and
a purity of the raw material is greater than 99%; and/or
the P source contains PO₄³⁻, and a molar ratio of the Li element contained in the Li source, the Fe element contained in the Fe source, the Mn element contained in the Mn source, the M as the dopant element contained in the M source, and the PO₄³⁻ contained in the P source is a:b:c:d:e, in which, 0.99 ≤ a ≤ 1.1, 0.95 ≤ e ≤ 1.1, 0.001 ≤ d ≤ 0.03, and 0.9 ≤ b + c + d ≤ 1.1.

In some embodiments, the dopant element comprises at least one element selected from Zr, Co, In, Ti, Na, Zn, Al, Ni, Ca, Nb, Cd, Sn, Mo, and B.

In some embodiments, the organic solvent comprises at least one of methanol, ethanol, ethylene glycol, polyvinyl alcohol, glycerol, n-butanol, and benzyl alcohol; and/or
a mass ratio of an addition amount of the organic solvent to the raw material is (1 to 3): 1.

In some embodiments, a temperature of the heating and combustion treatment is 600°C to 1000°C.

In some embodiments, a temperature of the sintering treatment is 300°C to 900°C.

In some embodiments, the sintering treatment comprises the following steps:
subjecting the precursor powder to a first sintering treatment to obtain a first sintered product;
mixing the first sintered product with a shell layer raw material to obtain a precursor mixture; and
subjecting the precursor mixture to a second sintering treatment.

In some embodiments, the shell layer raw material comprises at least one of a carbon source, a fast ion conductor, and an oxide. The oxide contains at least one element selected from Al, Zr, B, Ti, Si, Li, P, and S.

In some embodiments, a mass ratio of the shell layer raw material to a theoretical yield of the modified cathode material is (0.1 to 2):100.

In some embodiments, a temperature of the first sintering treatment is 300°C to 500°C.

In some embodiments, a temperature of the second sintering treatment is 650°C to 900°C.

In some embodiments, the step of mixing the first sintered product with the shell layer raw material to obtain the precursor mixture further comprises: adding a solvent to the first sintered product and the shell layer raw material to perform the mixing, preparing a spray solution, and subjecting the spray solution to a spray-drying treatment to obtain the precursor mixture.

In some embodiments, the carbon source comprises at least one of glucose, sucrose, citric acid, acetylene black, and polyethylene glycol.

In some embodiments, the fast ion conductor comprises at least one of a phosphate and a lithium metal composite oxide.

In some embodiments, the oxide contains at least one element selected from Al, Zr, B, Ti, Si, Li, P, and S.

In a third aspect, the present application a secondary battery, comprising a cathode. The cathode comprises the modified cathode material according to embodiments of the present application, or the modified cathode material prepared by the preparation method according to embodiments of the present application.

The cathode of the secondary battery according to the embodiments of the present application contains the modified cathode material of the present application; consequently, the secondary battery exhibits excellent electrochemical performance, particularly with regard to Coulombic efficiency, rate performance, and cycling performance.

### DESCRIPTION OF THE DRAWINGS

To more clearly illustrate the technical solutions set forth in the embodiments of the present application, the accompanying drawings required for describing the embodiments or the prior art are briefly introduced below. It is evident that the drawings described below depict merely some embodiments of the present application; for a person of ordinary skill in the art, other drawings may be derived from these drawings without the exercise of inventive labor.
FIG. 1 is a TEM image of a modified cathode material according to Example A1 of the present application;
FIG. 2 is an SEM-EDS elemental distribution map of a modified cathode material according to Example A1 of the present application;
FIG. 3 is a schematic diagram of a structure of a modified cathode material according to an embodiment of the present application.

The following reference numerals are adopted:
1, Particles of modified cathode material; and 2, Shell layer.

### DETAILED DESCRIPTION OF THE EMBODIMENTS

To clarify the technical problem to be solved, the technical solution, and the beneficial effects of the present application, the present application is described in further detail below in conjunction with specific embodiments. It should be understood that the specific embodiments described herein are provided solely to illustrate the present application and are not intended to limit the scope thereof.

In the present application, the term "and/or" describes the associative relationship between associated objects, indicating that three possible relationships may exist. For example, "A and/or B" may denote the scenarios where A exists alone, where both A and B exist simultaneously, or where B exists alone. Herein, A and B may be in either the singular or the plural form. The character "/" generally indicates that the associated objects preceding and following it are related by an "or" relationship.

In this application, "at least one" refers to one or more, and "multiple" refers to two or more. "At least one of the following" or similar expressions refer to any combination of these items, including any combination of single items or multiple items. For example, "at least one of a, b, or c," or "at least one of a, b, and c," may each denote: a, b, c, a-b (i.e., a and b), a-c, b-c, or a-b-c, in which, a, b, and c may each be a single item or multiple items.

It should be understood that, in various embodiments of the present application, the numerical order assigned to the aforementioned processes does not imply a specific sequence of execution; rather, some or all of the steps may be performed either in parallel or sequentially. The execution order of the respective processes should be determined based on their functional roles and inherent logic, and should not be construed as imposing any limitation on the implementation procedures of the embodiments described herein.

The terminology used in the embodiments of the present application is for the purpose of describing specific embodiments only and is not intended to limit the present application. As used in the embodiments of the present application and the appended claims, the singular forms "a", "an", and "the" are also intended to include the plural forms, unless the context clearly indicates otherwise.

The weights of the relevant components mentioned in the specification of the embodiments of the present application refer not only to the specific content of each individual component but also to the proportional weight relationships among the components; therefore, any formulation in which the content of the relevant components is proportionally scaled up or down relative to the values disclosed in the specification of the embodiments of the present application falls within the scope of the disclosure herein. Specifically, the mass values set forth in the specification of the embodiments of the present application may be expressed in units of mass well-known in the field of chemistry, such as µg, mg, g, kg, etc.

The terms "first" and "second" are used herein for descriptive purposes only, to distinguish objects, such as substances, from one another, and are not to be construed as indicating or implying relative importance, nor as implicitly specifying the dosage of the indicated technical features. For example, without departing from the scope of the embodiments of the present application, a "first XX" may also be referred to as a "second XX", and similarly, a "second XX" may also be referred to as a "first XX." Accordingly, features qualified by "first" or "second" may explicitly or implicitly encompass one or more of such features.

Embodiments of a first aspect of the present application provides a modified cathode material. Elements within particles of the modified cathode material are uniformly distributed. A chemical formula of the modified cathode material is LiₐFe_{b}Mn_{c}M_{d}PO₄, in which, 0.9 ≤ a ≤ 1.1, 0.2 ≤ b ≤ 0.9, 0.1 ≤ c ≤ 0.8, 0 < d ≤ 1, and 1.9 ≤ a + b + c + d ≤ 2.1, and M is a dopant element.

The particles of the modified cathode material refer to particles having a chemical formula of LiₐFe_{b}Mn_{c}M_{d}PO₄.

The uniform distribution of elements within the particles of the modified cathode material refers to the uniform distribution of the elements contained within the particles themselves.

In the embodiments of the present application, the elements within the particles of the modified cathode material exhibit a uniform distribution and high crystallinity; furthermore, the modified cathode material incorporates dopant elements, thereby endowing the cathode material with excellent electrochemical properties, specifically, high Coulombic efficiency, rate performance, and cycling performance, when utilized in batteries.

In some embodiments, at least 90% of the particles in the modified cathode material satisfy Δy ≤ 0.02;
in which, Δy = | y - y' + (x - x') |;
y is a molar ratio of a Mn element to a Fe element at any position within at least 90% of the particles in the modified cathode material;
y' is an average molar ratio of the Mn element to the Fe element contained in the modified cathode material;
x is a doping amount of the dopant element at any position within at least 90% of the particles in the modified cathode material;
x' is an average doping amount of the dopant element contained in the modified cathode material; and
Δy is a molar deviation content of the Mn element, the Fe element, and the dopant element M at any position within the particles of the modified cathode material.

The above describes the scenario where elemental testing and statistical methods are used to obtain the elemental distribution in the modified cathode material. According to the statistics, when Δy ≤ 0.02 for more than 90% of the particles of the modified cathode material in the embodiments of the present application, it can be considered that the Mn and Fe elements in the modified cathode material are uniformly distributed in terms of their proportion, the dopant element is also uniformly distributed, the crystallinity is high, and the material exhibits high electrochemical performance.

In some embodiments, the dopant element comprises at least one element selected from Zr, Co, In, Ti, Na, Zn, Al, Ni, Ca, Nb, Cd, Sn, Mo, and B. These dopant elements can enhance various properties of the modified cathode material and improve the modification effect. In some embodiments, a D50 particle size of the particles of the cathode material is 100 nm to 200 nm.

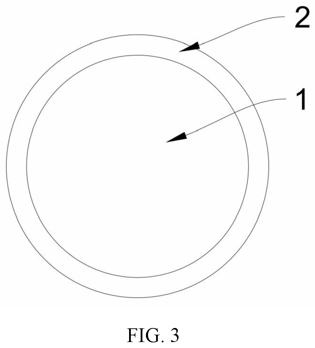

In some embodiments, as shown in FIG. 3, the modified cathode material comprises a particle 1 of the modified cathode material and a shell layer 2; the shell layer 2 is coated on a surface of the particle 1, and the shell layer 2 comprises a carbon material and/or a non-carbon material. The carbon material may comprise an amorphous carbon. The presence of carbon material in the shell layer 2 can enhance electrical conductivity and suppress side reactions with the electrolyte. The non-carbon material comprises at least one of a fast ion conductor and an oxide, in which, the oxide contains at least one element selected from Al, Zr, B, Ti, Si, Li, P, and S. The oxide may comprise titanium dioxide, zirconium dioxide, silicon dioxide, boron oxide, and the like. The shell layer 2 containing such oxide can serve as a physical barrier between the particle 1 of the modified cathode material and the electrolyte, thereby suppressing side reactions, scavenging HF, preventing chemical corrosion by the electrolyte, and mitigating the dissolution of transition metals, such as iron and manganese, from within the particles. The fast ion conductor refers to a material that facilitates ion migration, comprising a phosphate, a lithium metal composite oxide (e.g., lithium niobate, lithium titanate), a lithium metal composite compound, and the like. The shell layer 2 comprising the fast ion conductor can improve the ion transport properties of the particle 1 of the modified cathode material, enhance both electronic and ionic conductivity, facilitate surface chemical modification, and promote interfacial ion charge transfer.

In some embodiments, a thickness of the shell layer ranges from 0.3 nm to 10 nm; an illustrative example may include, but is not limited to, 0.3 nm, 0.7 nm, 1 nm, 5 nm, and 10 nm. The shell layer having a thickness in such a range facilitates an improved coating effect for the modified cathode material described in the embodiments of this application, thereby enhancing its electrochemical performance. The thickness may be selected based on the specific type of material and the desired coating modification effect.

In some embodiments, the modified cathode material comprises shells present in at least 90% of its particles (where each particle consists of a shell and an encapsulated core of the modified cathode material); that is, the modified cathode material contains a shell layer, and for at least 90% of the particles (the particles consisting of the shell layer and the encapsulated core of the modified cathode material), a difference between the minimum thickness and the maximum thickness of the shell layer is less than 0.1 nm. In illustrative examples, this difference may be 0.01 nm, 0.03 nm, 0.05 nm, 0.07 nm, 0.09 nm, or any range between any two of these values. Therefore, the shell layer comprised in the modified cathode material described in the embodiments of this application has a uniform thickness, which can improve the coating modification effect of the shell layer and enhance the electrochemical performance of the modified cathode material.

The modified cathode materials in the embodiments of the present application exhibit high crystallinity. In some embodiments, measurements indicate that a crystallinity of a (020) crystal plane of the modified cathode material ranges from 3.8% to 3.95%; illustrative examples may include, but are not limited to, 3.8%, 3.85%, 3.9%, 3.95%, and any range between any two of these values. The method for calculating crystallinity in the present application is as follows: the modified cathode material undergoes X-ray diffraction (XRD) analysis to obtain an XRD pattern, in which, the (020) crystal plane corresponds to an ac plane, and the (200) crystal plane corresponds to a bc-plane; a ratio of a diffraction peak area of the (020) crystal plane to that of the (200) crystal plane corresponds to the lithium-ion diffusion distance, the higher this ratio, the shorter the lithium-ion diffusion distance, and the more favorable the material is for lithium-ion transport. The crystallinity is derived from the aforementioned ratio of diffraction peak areas and may be denoted as I = A(020)/A(200). These modified cathode materials, characterized by their high crystallinity, demonstrate excellent Coulombic efficiency, rate performance, and cycling performance.

Embodiments of a second aspect of the present application provide a preparation method for a modified cathode material, comprising the following steps:
Step S10, dissolving a raw material for preparing particles of the modified cathode material, in an organic solvent to form a gel;
Step S20, subjecting the gel to a heating and combustion treatment to obtain a fluffy, porous precursor powder; and
Step S30, subjecting the precursor powder to a sintering treatment to obtain the modified cathode material.

The preparation method for modified cathode materials described in the embodiments of this application involves first preparing a gel, within which the raw materials are uniformly dispersed. Due to the gel's virtually non-flowing nature, in contrast to the solution mixing and solid-phase mixing techniques found in the prior art, the spatial distribution of these raw materials within the gel remains stable. Subsequently, the gel is heated and combusted; this process facilitates the simultaneous reaction of the various chemical components at essentially the same temperature point. Furthermore, because the raw materials are uniformly dispersed and stably positioned within the gel, these characteristics are effectively transferred from the liquid phase of the gel to the resulting solid phase during combustion, yielding a precursor powder. This powder then undergoes a sintering treatment to produce the modified cathode material. Consequently, the resulting modified cathode material exhibits a uniform and stable elemental distribution as well as high crystallinity. Compared to cathode materials produced via prior art methods, it demonstrates superior electrochemical performance, specifically, outstanding Coulombic efficiency, rate performance, and cycling performance. The preparation process is highly controllable, yielding a modified cathode material with stable structural and physicochemical properties.

### Step S10:

This step involves the preparation of a gel. In some embodiments, the gel is prepared by formulating the aforementioned raw material and an organic solvent into a mixed solution. Specifically, the raw material may be dissolved in an alcohol-based reagent and thoroughly stirred to obtain the mixed solution. The concentration of metal ions in the mixed solution may range from 0.01 mol/L to 10 mol/L. Subsequently, the mixed solution is heated or dried until the water evaporates, thereby yielding the gel.

The raw materials for the particles of the modified cathode material in Step S10 comprise: a Li source, a P source, a Mn source, an Fe source, and an M source; in which, M in the M source represents a dopant element. The P source contains PO₄³⁻, and a molar ratio of the Li element contained in the Li source, the Fe element contained in the Fe source, the Mn element contained in the Mn source, the M as the dopant element contained in the M source, and the PO₄³⁻ contained in the P source is a:b:c:d:e, in which, 0.99 ≤ a ≤ 1.1, 0.95 ≤ e ≤ 1.1, 0.001 ≤ d ≤ 0.03, and 0.9 ≤ b + c + d ≤ 1.1. This specific elemental ratio facilitates the enhancement of the electrochemical performance of the resulting modified cathode material. In the embodiments, the dopant element contained in the M source comprise at least one element selected from Zr, Co, In, Ti, Na, Zn, Al, Ni, Ca, Nb, Cd, Sn, Mo, and B.

In an embodiment, the aforementioned Li source comprises at least one of lithium carbonate, lithium oxalate, lithium acetate, and lithium nitrate. The aforementioned P source comprises at least one of phosphoric acid, ammonium phosphate, and ammonium dihydrogen phosphate. The aforementioned Mn source comprises at least one of manganese carbonate, manganese oxalate, manganese acetate, and manganese nitrate. The aforementioned Fe source comprises at least one of ferrous oxalate, ferrous acetate, iron phosphate, iron nitrate, and ferrous nitrate. The aforementioned M source comprises common compounds of the corresponding dopant elements; for instance, if the dopant element is V, the source comprises vanadium oxide; if the dopant element is Ni, the source comprises nickel oxide and the like. In some embodiments, the purity of the aforementioned raw materials is greater than 99%, thereby preventing impurities from forming due to stoichiometric errors caused by excessively low purity, which would otherwise adversely affect the properties of the resulting modified cathode material.

In some embodiments, the organic solvent comprises at least one of methanol, ethanol, ethylene glycol, polyvinyl alcohol, glycerol, n-butanol, and benzyl alcohol. In accordance with the principle of "like dissolves like", hydroxyl-bearing organic compounds facilitate the dissolution of the raw materials; moreover, these alcoholic organic solvents are widely available, low in cost, and environmentally benign.

In some embodiments, a mass ratio of an addition amount of the organic solvent to the raw materials is (1 to 3):1. Illustrative examples include, but are not limited to, 1:1, 1.5:1, 2:1, 2.5:1, 3:1, and ranges between any two of these values. This mass ratio facilitates the control of the solid-to-liquid ratio of a resulting slurry, aids in the subsequent preparation of the gel, and can further enhance the uniformity of the elemental distribution within the particles of the modified cathode material.

### Step S20:

This step involves the preparation of a precursor powder through a heat-combustion treatment. The temperature for the heat-combustion treatment of the gel may range from 600°C to 1000°C; in illustrative examples, this range may include, but is not limited to, specific temperatures such as 600°C, 650°C, 700°C, 750°C, 800°C, 850°C, 900°C, and 1000°C, as well as any range defined between any two of these values. Once the desired temperature is reached, the gel is ignited at a specific point. During the combustion process, the combustion front propagates rapidly and uniformly outward in all directions. The airflow generated during combustion creates a violent impact, causing the reaction solution within the gel to disperse into fine droplets. As these droplets evaporate and lose their moisture under high-temperature conditions, the non-volatile components within them agglomerate and grow into crystalline grains. Upon the completion of the gel's combustion, a fluffy, porous, and loose precursor powder is formed. This fluffy, porous structure represents the crystalline morphology resulting from the heat-combustion treatment of the gel; such a porous structure facilitates the subsequent sintering treatment to yield the modified cathode material, or enables uniform coating during any subsequent surface modification processes.

### Step S30:

This step involves performing a sintering treatment to produce the modified cathode material. The sintering treatment must be conducted within a protective atmosphere, for instance, an atmosphere of nitrogen, argon, or the like. In certain embodiments, particularly when the gel contains trivalent iron, for example, when the iron source in the raw materials comprises trivalent iron, the gel may be mixed with a reducing carbon source. Alternatively, a reducing carbon source may be added directly to the raw materials. With a molar ratio of the reducing carbon source to the iron element exceeding 1:12, a carbothermal reduction reaction occurs during the sintering treatment in the protective atmosphere; this reaction reduces the iron element to its divalent state, thereby facilitating the production of the modified cathode material.

In some embodiments, the temperature may be raised to the sintering temperature at a heating rate of 1°C/min to 5°C/min. In some embodiments, the sintering temperature may range from 300°C to 900°C; exemplary values may include, but are not limited to, 300°C, 400°C, 500°C, 700°C, 900°C, and ranges between any two of these values. At the sintering temperature, the holding time for the sintering process may range from 12 hrs to 18 hrs; exemplary values may include, but are not limited to, 12 hrs, 14 hrs, 16 hrs, 18 hrs, and ranges between any two of these values.

In some embodiments, the first sintering treatment may also be divided into two stages, both of which are performed in a protective atmosphere; step S30 may comprise the following steps:
Step S31, subjecting the precursor powder to a first sintering treatment to obtain a first sintered product; and
Step S32, subjecting the first sintered product to a second sintering treatment.

By performing the first sintering treatment followed by the second sintering treatment, the degree of crystallinity and particle size can be more effectively controlled. In Step S31, the first sintering treatment involves heating the precursor powder at a heating rate of 1°C/min to 5°C/min to a temperature of 300°C to 500°C, followed by holding at this temperature for 4 hrs to 6 hrs to obtain the first sintered product.

In Step S32, the second sintering treatment involves heating the first sintered product at a heating rate of 1°C/min to 5°C/min to a temperature of 650°C to 900°C. In illustrative examples, this temperature range may include, but is not limited to, 650°C, 700°C, 800°C, 900°C, as well as any range between any two of these values. The material is held at this temperature for 8 hrs to 12 hrs, then cooled and ground to yield a modified cathode material characterized by uniform elemental distribution and high crystallinity. This process significantly enhances the electrochemical performance of the resulting modified cathode material. The dopant element can be incorporated at both the manganese and iron sites, thereby facilitating the preferential growth of specific crystal planes.

In some embodiments, step S32 may additionally involve mixing the first sintered product with a shell layer raw material to obtain a precursor mixture; and subjecting the precursor mixture to a second sintering treatment. This process yields a modified cathode material having a shell layer coated on a surface of the modified cathode material particle. This configuration serves to further enhance the modified cathode material's electrical conductivity and ion transport rate, while also suppressing side reactions with the electrolyte within the battery. The chemical formula for this modified cathode material, incorporating the shell layer, is denoted as: LiₐFe_{b}Mn_{c}M_{d}PO₄/Rₕ, where R represents the shell-coating material and h denotes the thickness of the shell layer.

In some embodiments, the shell layer raw material comprises at least one of a carbon source, a fast ion conductor, or an oxide. The oxide contains at least one element selected from Al, Zr, B, Ti, Si, Li, P, and S. Specifically, the carbon source may comprise at least one of glucose, sucrose, citric acid, acetylene black, or polyethylene glycol, enabling the preparation of a shell layer containing the amorphous carbon material, which enhances electrical conductivity and suppresses side reactions with the electrolyte. The oxide can form a shell layer containing an oxide such as titanium dioxide, zirconium dioxide, silicon dioxide, or boron oxide; alternatively, the shell layer raw material may also be substances such as silicic acid or boric acid. This shell layer serves as a physical barrier between the core of the modified cathode material and the electrolyte, thereby suppressing side reactions, scavenging HF, preventing chemical corrosion by the electrolyte, and mitigating the dissolution of transition metals, such as iron and manganese, from the core material. The fast ion conductor may comprise at least one of a phosphate, a lithium metal composite oxide (such as lithium niobate, lithium niobate), or a lithium metal composite compound, allowing for the preparation of a corresponding shell layer. This primarily serves to improve the ion transport properties of the resulting modified cathode material, enhance both electronic and ionic conductivity, facilitate surface chemical modification, and promote interfacial ion charge transfer.

In some embodiments, a mass ratio of the shell layer raw material to a theoretical yield of the modified cathode material is (0.1 to 2):100; illustrative examples may include, but are not limited to, 0.1:100, 0.5:100, 1:100, 2:100, and ranges between any two of these values. The mass ratio in the above range facilitates the control of the mass ratio between the resulting modified cathode material particle and the shell layer, enable the regulation of the thickness of the shell layer, and further enhance the electrochemical performance of the modified cathode material.

In some embodiments, the step of mixing the first sintered product with the shell layer raw material to obtain the precursor mixture further comprises: adding a solvent to the first sintered product and the shell layer raw material to perform the mixing, preparing a spray solution, and subjecting the spray solution to a spray-drying treatment to obtain the precursor mixture. The solvent employed may be a solvent featuring low surface tension and low viscosity. Specifically, the solvent may be at least one substance selected from deionized water, industrial alcohol, hexane, or supercritical carbon dioxide fluid, thereby facilitating the uniform coating of the shell layer raw material onto the surface of the first sintered product. More specifically, the mixing process may involve ball-milling the first sintered product, which has been cooled to room temperature, the shell layer raw material, and the solvent together for at least two hours to produce a spray solution. Subsequently, this spray solution undergoes spray-drying, particularly via a pressure spray-drying method, in which, a high-pressure pump is utilized to force the spray solution through an atomizer (spray gun) at a pressure of 70 to 200 atmospheres, this action atomizes the solution into fine droplets ranging from 10 to 200 nm in size, which then come into direct contact with hot air to undergo heat exchange, thereby completing the drying process within a short timeframe. Through the aforementioned liquid-phase ball-milling and rapid spray-drying techniques, the shell layer raw material is uniformly coated onto the outer surface of the first sintered product with a consistent thickness. This ensures the uniformity of the shell layer in the final modified cathode material, thereby enhancing its electrochemical performance.

During the second sintering treatment in Step S32, the shell layer raw material gradually form the shell layer, while the encapsulated first sintered product undergoes recrystallization and/or further particle size regulation; ultimately, the modified cathode material containing the particles of modified cathode material and shell layers coated on the particles is finally obtained.

Embodiments of a third aspect of the present application provide a secondary battery. A cathode of the secondary battery comprises the modified cathode material of the embodiments of the present application, or a modified cathode material prepared by the preparation method of the embodiments of the present application.

The preparation method for the secondary battery described in the embodiments of the present application may comprise the following steps: mixing the modified cathode material (according to the embodiments herein), polyvinylidene fluoride (PVDF), and carbon nanotubes (CNTs) in a mass ratio of 96:3:1; preparing a slurry using N-methyl-2-pyrrolidone (NMP) as the solvent; and subsequently coating, calendering, and slitting the mixture onto a current collector to fabricate a cathode sheet. A lithium metal sheet serves as the anode, a Celgard 2400 porous polypropylene (PP) membrane acts as the separator, and the electrolyte consists of a 1 mol/L lithium hexafluorophosphate (LiPF₆) solution dissolved in a solvent mixture of ethylene carbonate (EC) and dimethyl carbonate (DMC) at a volume ratio of 1:1. An R2032-type coin cell is then assembled according to the corresponding assembly process; upon completion, the cell is allowed to stand for 3 hrs to ensure thorough wetting of the electrode materials by the electrolyte.

The cathode of the secondary battery according to the embodiments of the present application contains the modified cathode material of the present application; consequently, the secondary battery exhibits excellent electrochemical performance, particularly with regard to Coulombic efficiency, rate performance, and cycling performance.

The following description is provided in conjunction with specific embodiments.

### Example A1

This example provides a modified cathode material and a preparation method thereof. The preparation method was performed by the following steps:

### S1: Preparation of the Gel

Raw materials required for preparing the cathode material, specifically lithium nitrate, ferrous oxalate, manganese carbonate, titanium dioxide (serving as the source of the titanium dopant), and phosphoric acid were collected according to the following molar ratio of ions: Li : Fe : Mn : Ti : PO₄³⁻ = 1.05 : 0.4 : 0.6 : 0.005 : 1. These materials were then added to a mixture of polyvinyl alcohol and ethylene glycol, thoroughly mixed, and subsequently heated and dried to yield a gel.

### S2: Heat-combustion Treatment

The gel obtained in Step S1 was placed into a tube furnace where nitrogen gas was introduced. Then the tube furnace was heated to 800°C to initiate a heat-combustion treatment. After 2 hrs, the heating was terminated. Upon cooling, a fluffy, porous precursor powder was obtained.

### S3: First Sintering Treatment

The flow of nitrogen gas was continued, and glucose was added as a reducing carbon source (a molar ratio of added glucose to iron elements was 1:12), which was intended for the subsequent reduction of the iron elements. The temperature of the tube furnace was raised to 500°C at a heating rate of 2°C/min to perform a first sintering treatment. The temperature was held for 4 hrs. Upon cooling, the product of the first sintering step was obtained.

### S4: Mixing Treatment

Lithium titanate (the raw material for the shell layer) was added in an amount equal to 1% of the theoretical yield of the modified cathode material. An aqueous ethanol solution was then added, with a mass ratio of lithium titanate to the aqueous ethanol solution of 1:1. The mixture was ball-milled at a rotational speed of 450 rpm for 2 hrs to obtain a spray solution. Subsequently, spray-drying was performed to obtain a precursor mixture.

### S5: Second Sintering Treatment

The precursor mixture was placed into a tube furnace where nitrogen gas was introduced. The temperature was raised to 750°C at a heating rate of 5°C/min to perform a second sintering treatment. The temperature was held for 8 hrs. Upon completion, the product of the second sintering treatment was cooled to room temperature. The resulting sample was ground and sieved through a 300-mesh screen to obtain the modified cathode material, which was designated as Li_{1.05}Fe_{0.4}Mn_{0.6}Ti_{0.005}PO₄/R₂.

The modified cathode material in this example was prepared using the method described herein. The modified cathode material in this example comprises a core and a shell layer; the core is a Ti-doped lithium manganese iron phosphate material, while the shell layer comprises lithium titanate and a carbon material. The thickness of the shell layer is 2 nm.

### Example A2

This example provides a modified cathode material and a preparation method thereof. The preparation method was performed by the following steps:

### S1: Preparation of the Gel

Raw materials required for preparing the cathode material, specifically lithium nitrate, ferrous oxalate, manganese nitrate, zirconium nitrate (serving as the source of the zirconium dopant), and phosphoric acid were collected according to the following molar ratio of ions: Li : Fe : Mn : Zr : PO₄³⁻ = 1.05 : 0.4 : 0.595 : 0.005 : 1. These materials were then added to a mixture of polyvinyl alcohol and ethylene glycol, thoroughly mixed, and subsequently heated and dried to yield a gel.

### S2: Heat-combustion Treatment

The gel obtained in Step S1 was placed into a tube furnace where nitrogen gas was introduced. Then the tube furnace was heated to 750°C to initiate a heat-combustion treatment. After 2 hrs, the heating was terminated. Upon cooling, a fluffy, porous precursor powder was obtained.

### S3: First Sintering Treatment

The flow of nitrogen gas was continued, and glucose was added as a reducing carbon source (a molar ratio of added glucose to iron elements was 1:12), which was intended for the subsequent reduction of the iron elements. The temperature of the tube furnace was raised to 400°C at a heating rate of 5°C/min to perform a first sintering treatment. The temperature was held for 5 hrs. Upon cooling, the product of the first sintering step was obtained.

### S4: Mixing Treatment

Lithium niobate (the raw material for the shell layer) was added in an amount equal to 1% of the theoretical yield of the modified cathode material. An aqueous ethanol solution was then added, with a mass ratio of lithium niobate to the aqueous ethanol solution of 1:1. The mixture was ball-milled at a rotational speed of 450 rpm for 2 hrs to obtain a spray solution. Subsequently, spray-drying was performed to obtain a precursor mixture.

### S5: Second Sintering Treatment

The precursor mixture was placed into a tube furnace where nitrogen gas was introduced. The temperature was raised to 750°C at a heating rate of 5°C/min to perform a second sintering treatment. The temperature was held for 8 hrs. Upon completion, the product of the second sintering treatment was cooled to room temperature. The resulting sample was ground and sieved through a 300 mesh screen to obtain the modified cathode material, which was designated as Li_{1.05}Fe_{0.4}Mn_{0.595}Zr_{0.005}PO₄/R₂.

The modified cathode material in this example was prepared using the method described herein. The modified cathode material in this example comprises a core and a shell layer; the core is a Zr-doped lithium manganese iron phosphate material, while the shell layer comprises lithium niobate and a carbon material. The thickness of the shell layer is 2 nm.

### Example A3

This example provides a modified cathode material and a preparation method thereof. The preparation method was performed by the following steps:

### S1: Preparation of the Gel

Raw materials required for preparing the cathode material, specifically lithium nitrate, ferric nitrate, manganese nitrate, silicon dioxide (serving as the source of the silicon dopant), and ammonium phosphate were collected according to the following molar ratio of ions: Li : Fe : Mn : Si : PO₄³⁻ = 1.05 : 0.4 : 0.595 : 0.005 : 1. These materials were then added to a mixture of polyvinyl alcohol and ethylene glycol, thoroughly mixed, and subsequently heated and dried to yield a gel.

### S2: Heat-combustion Treatment

The gel obtained in Step S1 was placed into a tube furnace where nitrogen gas was introduced. Then the tube furnace was heated to 800°C to initiate a heat-combustion treatment. After 2 hrs, the heating was terminated. Upon cooling, a fluffy, porous precursor powder was obtained.

### S3: First Sintering Treatment

The flow of nitrogen gas was continued, and glucose was added as a reducing carbon source (a molar ratio of added glucose to iron elements was 1:12), which was intended for the subsequent reduction of the iron elements. The temperature of the tube furnace was raised to 500°C at a heating rate of 5°C/min to perform a first sintering treatment. The temperature was held for 4 hrs. Upon cooling, the product of the first sintering step was obtained.

### S4: Mixing Treatment

Boric acid (the raw material for the shell layer) was added in an amount equal to 2% of the theoretical yield of the modified cathode material. An aqueous ethanol solution was then added, with a mass ratio of lithium titanate to the aqueous ethanol solution of 1:1. The mixture was ball-milled at a rotational speed of 450 rpm for 2 hrs to obtain a spray solution. Subsequently, spray-drying was performed to obtain a precursor mixture.

### S5: Second Sintering Treatment

The precursor mixture was placed into a tube furnace where nitrogen gas was introduced. The temperature was raised to 750°C at a heating rate of 5°C/min to perform a second sintering treatment. The temperature was held for 8 hrs. Upon completion, the product of the second sintering treatment was cooled to room temperature. The resulting sample was ground and sieved through a 300 mesh screen to obtain the modified cathode material, which was designated as Li_{1.05} Fe_{0.4}Mn_{0.595}Si_{0.005}PO₄/R₃.

The modified cathode material in this example was prepared using the method described herein. The modified cathode material in this example comprises a core and a shell layer; the core is a Zr-doped lithium manganese iron phosphate material, while the shell layer comprises boron oxide and a carbon material. The thickness of the shell layer is 3 nm.

### Example A4

This example provides a modified cathode material and a preparation method thereof. The preparation method differs from that of Example A1 solely in that: in step S4, the amount of raw material used for the shell layer was increased from 1% to 2%, while all other parameters remained unchanged.

The modified cathode material of this example is obtained via the preparation method described herein, and the thickness of its shell layer is 2.5 nm.

### Example A5

This embodiment provides a modified cathode material and a preparation method thereof. The preparation method differs from that of Example A1 solely in that, in Step S4, the amount of raw material used for the shell layer is increased from 1% to 3%, while all other parameters remain unchanged.

The modified cathode material of this example is obtained using the preparation method described herein, and the thickness of its shell layer is 2.2 nm.

### Example A6

This example provides a modified cathode material and a preparation method thereof. The preparation method differs from that of Example A1 solely in that the precursor for the shell layer in Step S4 is replaced with glucose, while all other aspects remain unchanged.

The modified cathode material of this example is obtained via the preparation method described herein, and its shell layer consists of a carbon material (amorphous carbon).

### Comparative Example A1

Comparative Example A1 This Comparative Example provides a modified cathode material and a preparation method thereof. The preparation method differs from that of Example A1 in the following respect: in Step S1, the raw materials for preparing the particles of the modified cathode material were mixed by a solid-phase method with ball-milling for 2 hrs to obtain a precursor; Step S2 was omitted, and the precursor was directly subjected to the first sintering treatment in Step S3, with all other conditions unchanged.

The modified cathode material of this Comparative Example was prepared by the preparation method described above.

### Comparative Example A2

This Comparative Example provides a modified cathode material and a preparation method thereof. The preparation method differs from that of Example A1 in the following respect: in Step S1, the raw materials for preparing the particles of the modified cathode material were mixed in deionized water by a liquid-phase precipitation method; the precipitate was dried and ball-milled to obtain a precursor; Step S2 was omitted, and the precursor was directly subjected to the first sintering treatment in Step S3, with all other conditions unchanged.

The modified cathode material of this Comparative Example is obtained via the preparation method described herein.

### Comparative Example A3

This Comparative Example provided a modified cathode material and a preparation method thereof. The preparation method differed from that of Example A1 only in the following respect: the spray-drying process was not included in Step S4, and the material was directly dried in an oven after ball-milling, with all other conditions unchanged.

The modified cathode material of this Comparative Example was prepared by the above preparation method.

### Comparative Example A4

This Comparative Example provided a modified cathode material and a preparation method thereof. The preparation method differed from that of Example A1 only in the following respects: Step S3 was modified to introduce nitrogen and reducing gas H₂ without adding glucose; Step S4 was omitted, and the first sintered product obtained from Step S3 was directly subjected to the second sintering treatment in Step S5; Step S5 was also modified to introduce nitrogen and reducing gas H₂, where H₂ was used to reduce trivalent iron, with all other conditions unchanged.

The modified cathode material of this Comparative Example was prepared by the above preparation method and contained no shell layer.

### Lithium-ion Battery Examples

The aforementioned modified cathode materials were assembled into cathodes and lithium-ion batteries, respectively, using the following methods:

Cathode: The modified cathode material, polyvinylidene fluoride (PVDF), and carbon nanotubes (CNTs) were mixed in a mass ratio of 96:3:1. Using N-methylpyrrolidone (NMP) as a solvent to form a slurry, the mixture was coated onto a current collector, followed by rolling and slitting to prepare the cathode sheet.

### Anode: Lithium metal foil.

Electrolyte: The electrolyte consisted of a 1 mol/L solution of lithium hexafluorophosphate (LiPF₆), utilizing a solvent mixture of ethylene carbonate (EC) and dimethyl carbonate (DMC) in a volume ratio of 1:1.

### Separator: Celgard 2400 porous polypropylene (PP) membrane.

Lithium-ion Battery Assembly: R2032-type coin cells were assembled within an inert-atmosphere glovebox following the assembly sequence of lithium metal foil-separator-electrolyte-cathode sheet. Upon completion, the cells were allowed to stand for 3 hrs to ensure thorough wetting of the electrode materials by the electrolyte.

Specifically, the lithium-ion battery fabricated using the modified cathode material from Example A1 was designated as Example B1; the lithium-ion battery fabricated using the modified cathode material from Example A2 was designated as Example B2; and so on in corresponding order, up to the lithium-ion battery fabricated using the modified cathode material from Comparative Example A2, which was designated as Comparative Example B4.

### Relevant Performance Tests and Results Analysis

### 1. Tests on the Modified Cathode Materials

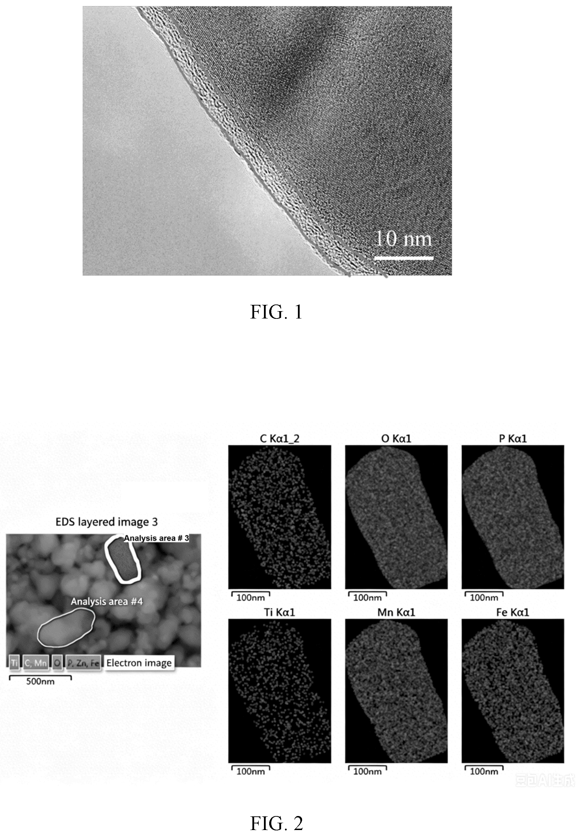

1.1 The aforementioned modified cathode materials were subjected to Transmission Electron Microscopy (TEM) analysis to determine the thickness of the shell layer; the results are recorded in Table 1 below. Specifically, the TEM image of the modified cathode material from Example A1 is shown in FIG. 1. As can be observed from FIG. 1, the shell layer in the modified cathode material encapsulates the core body, and the shell thickness is uniform.
1.2 The aforementioned modified cathode materials were subjected to Scanning Electron Microscopy-Energy Dispersive Spectroscopy (SEM-EDS) analysis to obtain elemental distribution maps. The EDS elemental distribution map for the modified cathode material from Example A1 is presented in FIG. 2. As indicated in FIG. 2, the various elements contained within the modified cathode material of Example A1 are uniformly distributed, with no discernible regions of elemental aggregation.
1.3 The aforementioned modified cathode materials were subjected to X-ray Diffraction (XRD) analysis to obtain XRD patterns. By fitting the diffraction patterns using JADE software, the crystallinity of the (020) crystal plane of each sample was directly determined; the results are recorded in Table 1 below.

**Table 1**

| Examples | Difference from Example A1 | Element M | Shell layer Material | Shell layer Thickness /nm | Crystallinity of (020) Crystal Plane |
|---|---|---|---|---|---|
| Example A1 | / | Ti | Lithium Titanate and Carbon | 2 | 3.81 |
| Example A2 | Adjustment of dopant elements, shell materials, etc. | Zr | Lithium Niobate and Carbon | 2 | 3.92 |
| Example A3 | Adjustment of dopant elements, shell materials, dosages, etc. | Si | Boron Oxide and Carbon | 3 | 3.80 |
| Example A4 | Shell precursor dosage adjusted from 1% to 2% | Ti | Lithium Titanate and Carbon | 2.5 | 3.81 |
| Example A5 | Shell precursor dosage adjusted from 1% to 3% | Ti | Lithium Titanate and Carbon | 2.2 | 3.80 |
| Example A6 | Shell precursor replaced with glucose | Ti | Amorphous Carbon | 2 | 3.89 |
| Comparative Example A1 | Step S1 modified to utilize a solid-phase preparation method | Ti | Lithium Titanate and Carbon | 2 | 3.67 |
| Comparative Example A2 | Step S1 modified to utilize a liquid-phase preparation method | Ti | Lithium Titanate and Carbon | 2 | 3.56 |
| Comparative Example A3 | Step S3 modified to use conventional drying instead of spray-drying | Ti | Lithium Titanate and Carbon | 2 | 3.77 |
| Comparative Example A4 | Step S4 omitted; Steps S3 and S4 replaced by gas-phase reduction | Ti | / | / | 3.78 |

### 2. Lithium-ion Battery Example:

The electrochemical performance of the aforementioned lithium-ion battery was tested under the following conditions: at room temperature (25°C ± 1°C), constant-current/constant-voltage charge-discharge experiments were conducted against Li/Li⁺ within a voltage range of 2.5 to 4.3 V. The results are recorded in Table 2 below.

**Table 2**

| [table1_sm_0001] | | | |
|---|---|---|---|
| Examples | Initial Discharge Specific Capacity (mAh/g) | Coulombic Efficiency (%) | Capacity Retention after 500 Cycles at 25°C (%) |
| Example B1 | 155.25 | 99.05 | 93.56 |
| Example B2 | 155.48 | 99.12 | 94.07 |
| Example B3 | 154.96 | 99.28 | 93.38 |
| Example B4 | 153.06 | 99.12 | 94.20 |
| Example B5 | 152.56 | 99.01 | 92.10 |
| Example B6 | 153.25 | 99.00 | 91.02 |
| Comparative Example B1 | 145.52 | 95.62 | 50.23 |
| Comparative Example B2 | 136.28 | 94.31 | 60.78 |
| Comparative Example B3 | 149.23 | 99.04 | 89.56 |
| Comparative Example B4 | 149.50 | 99.15 | 86.25 |

As evident from Table 1 and Table 2, the embodiments of the present application utilize a gel combustion method combined with spray-drying to prepare a modified lithium manganese iron phosphate cathode material. This material features ac-plane orientation, uniform distribution of the host elements, uniform distribution of dopant elements, and a uniform thickness of the carbon/non-carbon coating layer. Specifically, the process involves dissolving raw materials in an alcoholic organic solvent to form a gel; subjecting the gel to a heating and combustion treatment to yield a fluffy, porous precursor powder; and subsequently performing a sintering treatment to obtain the modified cathode material. Compared to conventional solid-phase and liquid-phase precipitation methods of the prior art, the resulting modified cathode material exhibits a more uniform elemental distribution. This uniformity facilitates an improvement in the crystallinity of the modified cathode material, thereby enhancing its Coulombic efficiency and rate discharge performance, while improving its cycle retention rate.

As demonstrated in Examples A1 through A6, the dosage of shell layer raw materials employed directly influences the thickness of the resulting shell layer. An optimal shell thickness falls within a specific range; if the coating of the fast ion conductor is excessive, both the initial Coulombic efficiency and the cycling efficiency may actually decrease. Compared to technical solutions utilizing conventional drying methods, Example A1 employs a spray-drying technique, which facilitates the formation of a shell layer with uniform thickness. Furthermore, the presence of a coating shell layer on the surface of the modified cathode material particles contributes to enhancing the electrochemical performance of the resulting material.

The foregoing description presents merely the preferred embodiments of the present application and is not intended to limit the scope thereof. Any modifications, equivalent substitutions, or improvements made within the spirit and principles of the present application shall be deemed to fall within the scope of protection claimed herein.

## Claims

1. A modified cathode material, **characterized in that**
elements within particles of the modified cathode material are uniformly distributed, and
the modified cathode material has a chemical formula of LiₐFe_{b}Mn_{c}M_{d}PO₄, wherein 0.9 ≤ a ≤ 1.1, 0.2 ≤ b ≤ 0.9, 0.1 ≤ c ≤ 0.8, 0 < d ≤ 1, and 1.9 ≤ a + b + c + d ≤ 2.1, and M is a dopant element.

2. The modified cathode material according to claim 1, wherein
at least 90% of the particles in the modified cathode material satisfy Δy ≤ 0.02,
wherein Δy = | y - y' + (x - x') |;
y is a molar ratio of a Mn element to a Fe element at any position within at least 90% of the particles in the modified cathode material;
y' is an average molar ratio of the Mn element to the Fe element contained in the modified cathode material;
x is a doping amount of the dopant element at any position within at least 90% of the particles in the modified cathode material;
x' is an average doping amount of the dopant element contained in the modified cathode material; and
Δy is a molar deviation content of the Mn element, the Fe element, and the dopant element M at any position within the particles of the modified cathode material.

3. The modified cathode material according to claim 1 or 2, wherein the modified cathode material further comprises a shell layer, the shell layer is coated on a surface of each of the particles of the modified cathode material, and the shell layer comprises a carbon material and/or a non-carbon material.

4. The modified cathode material according to claim 3, wherein the carbon material comprises an amorphous carbon; and/or
the non-carbon material comprises at least one of a fast ion conductor and an oxide.

5. The modified cathode material according to claim 4, wherein
the oxide comprises at least one element selected from Al, Zr, B, Ti, Si, Li, P, and S; and/or
the oxide comprises at least one selected from titanium dioxide, zirconium dioxide, silicon dioxide, and boron oxide.

6. The modified cathode material according to claim 4 or 5, wherein the fast ion conductor comprises at least one selected from a phosphate, a lithium metal composite oxide, and a lithium metal composite compound.

7. The modified cathode material according to any one of claims 3-6, wherein a thickness of the shell layer is 0.3 to 10 nm.

8. The modified cathode material according to any one of claims 3-7, wherein for at least 90% of the particles in the modified cathode material, a difference between a minimum thickness and a maximum thickness of the shell layer is no greater than 0.1 nm.

9. The modified cathode material according to any one of claims 1-8, wherein
a crystallinity of a (020) crystal plane of the modified cathode material is 3.8% to 3.95%; and/or
a D50 particle size of the particles of the cathode material is 100 nm to 200 nm; and/or
the dopant element comprises at least one element selected from Zr, Co, In, Ti, Na, Zn, Al, Ni, Ca, Nb, Cd, Sn, Mo, and B.

10. A preparation method for a modified cathode material, **characterized by** comprising the following steps:
dissolving a raw material for preparing particles of the modified cathode material, in an organic solvent to form a gel;
subjecting the gel to a heating and combustion treatment to obtain a fluffy, porous precursor powder; and
subjecting the precursor powder to a sintering treatment to obtain the modified cathode material.

11. The preparation method according to claim 10, wherein the raw material comprises: a Li source, a P source, a Mn source, a Fe source, and an M source; wherein M in the M source is a dopant element, and
a purity of the raw material is greater than 99%; and/or
the P source contains PO₄³⁻, and a molar ratio of Li element contained in the Li source, Fe element contained in the Fe source, Mn element contained in the Mn source, the M as the dopant element contained in the M source, and the PO₄³⁻ contained in the P source is a:b:c:d:e, wherein 0.99 ≤ a ≤ 1.1, 0.95 ≤ e ≤ 1.1, 0.001 ≤ d ≤ 0.03, and 0.9 ≤ b + c + d ≤ 1.1.

12. The preparation method according to claim 11, wherein the dopant element comprises at least one element selected from Zr, Co, In, Ti, Na, Zn, Al, Ni, Ca, Nb, Cd, Sn, Mo, and B.

13. The preparation method according to any one of claims 10-12, wherein the organic solvent comprises at least one of methanol, ethanol, ethylene glycol, polyvinyl alcohol, glycerol, n-butanol, and benzyl alcohol; and/or
a mass ratio of an addition amount of the organic solvent to the raw material is (1 to 3): 1.

14. The preparation method according to any one of claims 10-13, wherein
a temperature of the heating and combustion treatment is 600°C to 1000°C; and/or
a temperature of the sintering treatment is 300°C to 900°C.

15. The preparation method according to any one of claims 10-14, wherein the sintering treatment comprises the following steps:
subjecting the precursor powder to a first sintering treatment to obtain a first sintered product;
mixing the first sintered product with a shell layer raw material to obtain a precursor mixture; and
subjecting the precursor mixture to a second sintering treatment.

16. The preparation method according to claim 15, wherein the shell layer raw material comprises at least one of a carbon source, a fast ion conductor, and an oxide, wherein the oxide contains at least one element selected from Al, Zr, B, Ti, Si, Li, P, and S; and/or
a mass ratio of the shell layer raw material to a theoretical yield of the modified cathode material is (0.1 to 2):100; and/or
a temperature of the first sintering treatment is 300°C to 500°C; and/or
a temperature of the second sintering treatment is 650°C to 900°C; and/or
the step of mixing the first sintered product with the shell layer raw material to obtain the precursor mixture further comprises: adding a solvent to the first sintered product and the shell layer raw material to perform the mixing, preparing a spray solution, and subjecting the spray solution to a spray-drying treatment to obtain the precursor mixture.

17. The preparation method according to claim 16, wherein the carbon source comprises at least one of glucose, sucrose, citric acid, acetylene black, and polyethylene glycol; and/or
the fast ion conductor comprises at least one of a phosphate and a lithium metal composite oxide; and/or
the oxide contains at least one element selected from Al, Zr, B, Ti, Si, Li, P, and S.

18. A secondary battery, comprising a cathode, wherein the cathode comprises the modified cathode material according to any one of claims 1-9, or the modified cathode material prepared by the preparation method according to any one of claims 10-17.
